Europäisches Patentamt

(19) European Patent Office

Office européen des brevets

(11) Publication number: **0 004 166**
**B1**

(12) **EUROPEAN PATENT SPECIFICATION**

(45) Date of publication of patent specification: **20.07.83**

(51) Int. Cl.³: **C 09 D 5/02, B 05 D 5/06, C 08 L 31/00**

(21) Application number: **79300319.5**

(22) Date of filing: **02.03.79**

(54) Coating compositions.

(30) Priority: **03.03.78 GB 861078**
**10.07.78 GB 2934078**

(43) Date of publication of application:
**19.09.79 Bulletin 79/19**

(45) Publication of the grant of the patent:
**20.07.83 Bulletin 83/29**

(84) Designated Contracting States:
**BE CH DE FR IT LU NL SE**

(56) References cited:
**FR - A - 1 504 638**
**US - A - 3 960 759**

(73) Proprietor: **IRVINE RESEARCH (PAINTS) LIMITED**
**3, Dunlop Drive Meadowhead Industrial Estate**
**Irvine Ayrshire, Scotland (GB)**

(72) Inventor: **Robotham, Trevor**
**West Toun House Westoun**
**Coalburn Lanark Scotland (GB)**
Inventor: **Wakeling, Allen George**
**Freshfields**
**Dundonald Ayrshire KA2 29BQ Scotland (GB)**

(74) Representative: **Ellis, John Clifford Holgate et al,**
**MEWBURN ELLIS & CO. 2/3 Cursitor Street**
**London EC4A 1BQ (GB)**

Courier Press, Leamington Spa, England.

# 0 004 166

## Coating compositions

This invention relates to coating compositions and in particular to water-based paints and to a two-coat system in which they are used to produce a gloss finish.

Conventional paint systems can be divided into two general classes, (a) organic solvent-based paints, usually applied as a system containing at least two coats, namely an "undercoat" and a "gloss", for example an alkyd gloss paint, and (b) water-based paints.

Alkyd gloss paints have given films of higher initial gloss than known water-based paints and may provide greater water resistance and better rust inhibiting properties. They also allow for heavy pigmentation and can be applied so as to give smooth surfaces free from brush marks, this being particularly assisted by the relatively long "wet edge" time allowing for spreading of the paint before it dries into a film.

However, solvent-based paints suffer from many disadvantages, some of which are given below:—

(1) the paints may release toxic or inflammable fumes,
(2) pale colours (especially white) may be somewhat dulled or yellowed both by the presence of the solvents and by a tendency to age rapidly,
(3) alkyd systems are prone to staining, especially by tobacco smoke,
(4) they do not have a particularly long shelf life,
(5) they are not particularly resistant to alkali salts,
(6) to achieve good film coverage and prevent running of the paint, particularly skilled application is required,
(7) re-coating of a surface requires rubbing down of the surface with sandpaper to obtain a key or alternatively the surface has to be completely stripped of previous layers of paint by burning or chemical means, and
(8) alkyd paints tend to lose their initial gloss rather quickly, particularly where subjected to the elements.

In today's environment, unpleasant odours are not so acceptable and the various fire and toxicity regulations now being brought into force are much more stringent.

This makes the use of water-based paints much more attractive. However, with conventional water-based gloss paints, it may be difficult to achieve a bright high-gloss surface, this being because of the high solids content due especially to the presence therein of pigments, fillers and extenders; in such paints the optimum amount of added pigment represents a compromise between heavy pigmentation to give high opacity and low pigmentation to achieve brightness and high-gloss (both of which are reduced on increasing the amount of pigment). In addition, a substantial amount of pigment may need to be incorporated in such paints to achieve a desired effect of shade.

It is to be noted that in conventional paints, whether solvent- or water-based, the colouring component must be provided by a pigment which is a particulate material completely insoluble in the paint vehicle.

In contrast to this, we have found that a high-gloss finish having sufficiently high opacity can be obtained by applying to a surface a water-based coating composition containing a polymeric binder component and, as colouring component, a dyestuff soluble in the aqueous medium.

The composition is applied as at least a top, gloss-providing coating in a two coat system, a desired depth of shade then being attainable using lower amounts of colouring components as compared with conventional emulsion paints. Since such a composition is water-based, it can be applied without the above-mentioned disadvantages associated with alkyd gloss paints and additionally provides a far superior gloss than can be achieved with the conventional water-based paints.

In addition, the use of paint compositions embodying the invention provides many further advantages (discussed in more detail later), particularly as regards savings in expense, over conventional water-based paints.

Embodiments of the present invention include
(1) a water-based paint composition comprising an aqueous medium containing, as colouring component, a dyestuff soluble in the aqueous medium, and a polymeric binder component, the paint composition being capable of providing a gloss coating, and
(2) a combination of colouring compositions for imparting colour and gloss to a surface, which combination comprises at least a first paint composition which is water-based, contains a first colouring component and is capable of providing an undercoating, and a second paint composition capable of providing the gloss, which second coating composition is water-based and contains a polymeric binder component in an amount sufficient to impart the gloss to the said surface and a second colouring component (which may be the same as, or different from, the first colouring component) which is a dyestuff soluble in the water. The two colouring components may be the same or different.

2

The paint composition referred to under (1) above may additionally contain a pigment when it is to be applied as a single coating.

The first paint composition of the combination referred to under (2) may also contain a pigment, though the second paint composition should be essentially free from pigment. This combination of colouring compositions thus provides a two-coat system in which the first coating, before application of a second coating, gives a matt finish which imparts the desired opacity (the desired matt finish can be achieved by the choice of the type and amount of the various constituents as later described) and the second coating imparts the gloss finish.

As with conventional paints, it is of course possible to provide more than one undercoat superimposed one on the other and/or more than one gloss. However, because the colour of the undercoat (and this may be highly coloured) contributes greatly to the overall colour of the two-coat system, there is more chance than with conventional paints of achieving sufficient opacity with only one top coat, and results comparable with known alkyd gloss and water-based paints can be achieved with less paint.

Thus, (a) because of this saving in paint, (b) because a depth of shade comparable with known paints can be achieved with less colouring material in the paints and (c) because the paints need not and indeed should not contain ingredients such as fillers and extenders, there is a great saving in expense both from the point of view of manufacturing costs and amounts of composition required to achieve a desired result. As will be described in more detail later, the principle of application of a two-coat system embodying the invention differs greatly from the application of a conventional solvent-based paint. In the latter case, the basic principle is to prepare a surface to be coated, then obliterate this with a primer and finally obliterate the primer with a top coat. In contrast, in a two-coat system embodying the invention, the undercoat is used only for the purposes of (a) obliteration and (b) combining its colouring properties with those of the top coat to fuse them together to give a single top colour reflectance, the single top coat giving all of the properties in the finished coating of a true gloss.

For certain applications, particularly on metals leather and plastics material already containing a pigment, a coating composition embodying the invention and capable of providing a gloss coating can be applied as a single coating without the presence of an undercoat to give a bright and high gloss finish with good depth of shade.

However, for most applications it is preferred to use the combination of compositions embodying the invention which provide the two-coat system.

The first coating may contain a pigment and this is preferred where good obliteration is required to cover, for example, dark surfaces with a pale shade. However, since pigments tend to reduce brightness, the first coating is, where improved brightness is desired, preferably produced by the application of a coating composition capable of providing the undercoat and in which at least a portion of the colouring component is a dyestuff soluble in the aqueous medium. A mixture of a pigment and a dyestuff can be used, and this is particularly preferred when a white colour is desired, in which case titanium dioxide is a preferred pigment.

The second coating is provided by applying a coating composition embodying the invention which contains a dyestuff and a polymeric binder component in a sufficient amount that the composition is capable of imparting a gloss finish to the coated surface.

When a dyestuff is used in the first coating this may be the same as that in the second coating, and such two-coat systems can be used to obtain a particularly bright and high gloss finish with good depth of shade.

Alternatively, the dyestuff in the second coating may be different from the dyestuff or other colouring component in the first coating, in which case a colour subtraction effect can be achieved whereby a second colour is superimposed on a first colour to produce a third. For example by painting a blue top coat over a yellow undercoat a bright green colour with high gloss can be obtained. This effect can be achieved because of the transparency of the top, dyestuff-containing, gloss coat.

Alternatively, a mottled effect can be achieved by coating different portions of a surface with different undercoats each containing a different colouring component and thereafter covering the entire surface with a single top coat.

The dyestuff in a coating composition embodying the invention may itself consist of a mixture of dyes.

The dyestuff is, as opposed to pigments used in conventional paints, a colouring component which is soluble in the aqueous medium so that at least some of the dyestuff is dissolved therein. Any remaining dyestuff in the composition should at least be capable of self-migration within the medium.

The solubility of the dyestuff in the aqueous medium is preferably at least 1 g/l and more preferably at least 10 g/l.

This contrasts greatly with known paint compositions in which it is essential that the component takes the form of insoluble particles, various carriers and colloid-forming compounds being added to the paint composition to maintain the powder in suspension in the composition.

In a coating composition embodying the invention (for either the undercoat or the top coat), most water-soluble dyestuffs (for example, direct and acid dyes), reactive dyes and modified solvent dyes (for example those modified with glycol) may be employed as the colouring components.

3

Preferred dyestuffs for use as the colouring component in coating compositions embodying the invention are acid and direct dyes, especially the premetallized azo and premetallized anthraquinone dyestuffs, this being because they tend to have high light fastness.

Typical dyestuffs which can be employed as the colouring component in both first and second coatings in a two-coat system embodying the invention, together with their Colour Index nomenclature and light fastness numbers, are shown in Table 1, from which it can be seen that the dyestuff may be an optical brightening agent:

TABLE 1

| Commercial dyestuff | Colour index Nomenclature | Light fastness No. |
|---|---|---|
| Lanasyn* Yellow 3GL | Cl Acid Yellow 111 | 5 |
| Sandolan* Yellow E-2GL | Cl Acid Yellow 17 | 4 |
| Solar* Discharge Orange 3LG | Cl Direct Orange 107 | 6 |
| Derma* Brown 3G-L | — | 6 |
| Solar Brown 2GL | Cl Direct Brown 115 | 3 |
| Solar Brown 2R | Cl Direct Red 111 | 2 |
| Lanasyn Red BL | Cl Acid Red 215 | 4 |
| Lanasyn Red BLN | — | 3 |
| Lanasyn Bordeaux RL | Cl Acid Red 217 | 5 |
| Sandolan Fast Violet P-3RL | Cl Acid Violet 47 | 2 |
| Lanasyn Blue BGL | — | 5 |
| Lanasyn Green 5GL | Cl Acid Green 80 | 3 |

The words "Lanasyn", "Sandolan", "Solar" and "Derma" are Trade Marks.

These dyes may be present in a total concentration of 5 g/l by weight of the total weight of first and second compositions applied to provide respective first and second coatings (5 g/l in each composition) thereby to impart to the coated surface a finish with a good deep shade, high brightness and high-gloss.

The most preferred dyes are, of course, those of high light fastness, and this is a property of many pre-metallized dyes.

A composition for use as an undercoat contains, as the polymeric binder component, a synthetic polymeric latex, for example a so-called "vinyl acetate copolymer" (i.e. a co-polymer containing, as one constituent, units derived from vinyl acetate and, as the other constituent, units derived from, for example, the vinyl ester of versatic acid) or a so-called "acrylic copolymer" in an aqueous medium, generally in an amount of 2:1 latex:water, the latex being at least 50% solids. The composition also contains a colouring component (which, as previously mentioned, is preferably a dyestuff) and usually contains in addition, a wetting agent (which may be anionic, e.g. potassium polyphosphate, cationic, e.g. cetyltrimethylammonium bromide or non-ionic, e.g. nonylphenol/ethylene oxide condensate), a defoamer (for example a fatty acid ester, fatty acid metal soap or silicone derivative), a coalescing aid (for example an ester of a long-chain alcohol, e.g. Texanol—a Trade Mark for $C_{12}$ alcohol ester produced by Eastman Chemical Products Ltd.) and a flow property improver (for example, propylene glycol).

The top, gloss-producing, coat differs from the undercoat in that (i) the absence of any substantial quantity of a pigment is essential, (ii) the presence of a dyestuff is essential, and (iii) it contains an amount of synthetic polymeric binder sufficient to provide a gloss. In general it is found that a proportional amount by weight of the polymeric binder component and water of at least 3:1 latex:water (the latex being at least 50% solids) is required to provide an acceptable gloss.

Gloss can be measured using a gloss meter which compares the amount of light reflected from a beam directed onto the coated surface at a given angle of incidence of the light beam (known as the "head") as compared with the amount reflected by a polished black glass plate for the same beam and angle of incidence. This give a value at that angle of incidence expressed in percentage terms and known as "specular gloss".

An acceptable gloss is one giving a specular gloss reading of at least 70% when measured on a Gardner gloss meter at a head of 45°. A conventional water-based emulsion paint gives a reading of about 40%.

Two-coat systems embodying the invention will now be described in more detail with reference to Table 2 showing specific Examples in which an undercoat provides the desired opacity and a top coat provides the desired gloss.

TABLE 2

| Example | Colouring component in undercoat (% W/V in brackets) | | Colouring component in gloss (% W/V in brackets) | |
|---|---|---|---|---|
| 1. | Pigment | | Lanasyn Blue BGL | (1%) |
| 2. | " | | " " " | (0.5%) |
| 3. | " | | Derma Brown 3GL | (1%) |
| 4. | " | | " " " | (0.5%) |
| 5. | " | | Sandolan Rubinole | (0.5%) |
| 6. | " | | " " | (0.1%) |
| 7. | Sandolan Rubinole E3GPL | (0.5%) | " " | (0.5%) |
| 8. | Drimarene Black ZBL | (0.2%) | Drimarene Black ZBL | (0.2%) |
| 9. | " " " | (0.5%) | " " " | (0.5%) |
| 10. | Leucophor BLR+TiO$_2$ | (0.1%) | Leucophor BLR | (0.1%) |
| 11. | " " " | (0.5%) | " " | (0.5%) |
| 12. | Sandolan Yellow E-2GL | (1%) | Sandolan Yellow E-2GL | (1%) |
| 13. | " " " | (0.5%) | " " " | (0.5%) |
| 14. | " " " | (1%) | Lanasyn Blue BGL | (1%) |

The Colour Index nomenclature for each of the dyestuffs given in Table 2 is as follows:—

Sandolan Rubinole E3GPL     CI Acid Red 57 (an acid levelling dye)
Drimarene Black ZBL     CI Reactive Black 4 (a reactive dye)
Sandolan Yellow E-2GL     CI Acid Yellow 17 (an acid pyrazolone dye)
Lanasyn Blue BGL     CI Acid Blue 250 (a premetallized acid dye)
Derma Brown 3GL     CI Acid Brown 303 (an acid dye)
Leucophor BLR is an optical brightener.

In the description of the preparation of the compositions of Table 2 given below, all amounts are expressed in terms of parts by weight.

The undercoats in Examples 1—6 are obtained by coating compositions each prepared by admixture of two component mixtures A and B.

Component A consists of:—

| | |
|---|---|
| Water | 205 |
| Calgon | 4.1 |
| Defoamer 1512M | 1.0 |
| Texanol | 5.0 |
| Propylene glycol | 20.0 |
| Titanium dioxide | 275.5. |

Component B consists of:—

| | |
|---|---|
| Emultex VV 536 | 486 |
| 880 ammonia | 2 |
| Natrosol | 16 |

The composition is prepared by adding Component B slowly to Component A with stirring.

In the above composition,

Calgon is a Trade Mark for a commercial potassium polyphosphate employed as a wetting agent and a dispersing agent for the pigment,

Defoamer 1512M is a commercial hydrophobic silica (dispersed in a hydrocarbon oil) produced by Hercules and employed as a defoaming agent;

Texanol is a commercial ester of a $C_{12}$ alcohol produced by Eastman Chemical Products Ltd. and employed as a coalescing aid;

Emultex VV 536 is a commercial "vinyl acetate copolymer" latex consisting of a fine particle size emulsion of vinyl acetate copolymerized with "Veova 10" (a commercial vinyl ester of versatic acid).

Natrosol is a Trade Mark for a commercial hydroxyethyl cellulose.

For the undercoat of Examples 10 and 11, 0.1% and 0.5% respectively of the titanium dioxide was replaced by the corresponding amount of the indicated dyestuff.

For the undercoat of Examples 7—9 and 12—14, no titanium dioxide was included and the amounts of dyestuffs employed were such as to provide the percentage amounts shown in the Table.

The top coatings providing the gloss in Examples 1—14 were obtained by coating compositions each prepared by, firstly mixing each of the following:

5

| Emultex VV536 | 150 |
|---|---|
| Water | 50 |
| Texacryl | 4 |
| Propylene glycol | 2 |
| Ammonia | 1.5 |
| Texanol | 1.5 |
| Formaldehyde | 1.5 |
| Sodium benzoate | 1 |

The dyestuff is then added in the amount shown in Table 2. In the above composition, Texacryl is a commercial emulsion chelating compound, the formaldehyde is employed as a preservative and fungicide and the sodium benzoate as a rust-inhibiting agent to prevent "in-can" rusting.

In each of the Examples, the amount of dyestuff employed was well below the saturation level. For example, the dyestuff in Examples 1—2 and 2—3 were soluble to 4% and 2% respectively in the gloss composition, these amounts being much higher than those used, as shown in Table 2.

Similarly, the dyestuff of Example 7 was soluble in the undercoat composition to 2%, that of Example 8 to 10% and that of Examples 12—14 to 6%.

Each of the above two-coat systems gave a finish having a high gloss with a good deep shade and high brightness.

For all of the coatings given in the Examples, the specular gloss, when measured on a Gardner gloss meter at a 45° head, was higher than 70%, this representing a "true" gloss, as compared with values of about 40% obtained for conventional water-based paints.

For example, the coating of Example 4 gave a specular gloss reading of 84%.

In general the gloss was slightly reduced on incorporating more dyestuff and, for example, the coating of Example 3 which contained twice the amount of the same dyestuff as Example 4 gave a specular gloss of 83%.

Similarly, the respective specular gloss values obtained for the coatings of each of Examples 5 and 6 were 83% and 84% the former coating containing more of the same dyestuff than the latter.

The coating of Example 7 in which 0.5% of the dyestuff was present as the sole colouring component of the undercoat and 0.5% was present in the gloss coat, gave a slightly reduced, though, of course, still very acceptable specular value, of 78%, but showed particularly excellent brightness as did all of Examples 7—14 in which the undercoat contained a dyestuff.

The two-coat system of Example 11 gave a particularly excellent white gloss having extremely high brightness and a specular gloss of 83% while that of Example 10 (the dyestuff constituting only 0.1% W/V of the total volume of the two compositions applied) gave a sufficiently acceptable brightness with an even higher specular gloss (86%).

Similar good results can be obtained by replacing the optical brightening agent of Examples 10 and 11 with a trace of a blue dyestuff insufficient to give a blue colouring, but sufficient to give a brightening effect, for example the dyestuff of Example 1.

The two-coat systems of Examples 8 and 9 each gave a good solid black colour with high gloss and brightness, this being particularly difficult to achieve with known paints.

Good results were also obtained when replacing the above-mentioned undercoat composition containing a vinyl acetate copolymer with one containing an acrylic copolymer, the components A and B then being as follows (parts are by weight):—

### Component A

| Water | 360 |
|---|---|
| Carboxylmethyl cellulose | 5 |
| Ammonia | 1.6 |
| Calgon | 2.5 |
| Titanium dioxide | 215 |

### Component B

| Revacryl 1A | 275 |
|---|---|
| Ethylene glycol | 40 |
| Texacryl 13-301 | 10 |
| Formaldehyde | 1 |

In the above composition Revacryl IA is a commercial medium particle size colloid-stabilized acrylic copolymer emulsion and Texacryl 13-301 is a commercial aqueous emulsion of a carboxylated acrylic copolymer produced by Scott Bader Co.

The acrylic copolymer undercoat gives particularly good adhesion properties, both to the substrate to be coated, especially to wood (which may be moist), and to the top coat; this good adhesion to the top coat provides particularly good scrubbability.

The top coat need not itself be of an acrylic copolymer, good scrubbability being obtained for example, when coating an acrylic copolymer undercoat with a vinyl acetate copolymer top coat.

The combination of coating compositions embodying the invention provides a two-coat system having many advantages over a conventional two-coat system provided by an alkyd gloss paint.

In particular, two-coat systems produced by combinations of coating compositions embodying the invention do not contain organic solvents so that toxic or inflammable fumes are not released on coating and nor are the coatings susceptible to yellowing with age or staining with tobacco, this being the case even for very pale colours. They have a long shelf life and after coating retain their gloss over a long period of time, they are resistant to alkali salts and provide good film coverage without difficulties being encountered in their application. They have good adhesion properties, this rendering the recoating of previously coated surfaces more efficient.

The application of a two-coat system using a combination of compositions embodying the invention enables the production of a finish which has excellent properties and which is far superior to that obtained using conventional water-based paints in the following respects,

(a) A far superior gloss can be attained.
(b) A higher brightness can be attained (by eliminating the pigment at least in the top coat, the pigment tending to cause dulling).
(c) A drastic saving in expense can be achieved, this being due to the following reasons,

    (i) Because of the requirement, in most cases, of only one top coat as previously described,
    (ii) because of the smaller quantities of colouring component required (see also (d) below) and
    (iii) because of the elimination of the requirement for extenders and fillers and substances required to prevent the colouring component from settling; the dyestuff employed in a composition embodying the invention is in solution and is thus self-migrating and needs no substances to prevent it from settling.

(d) A depth of shade can be obtained which is comparable with or even superior to that reached when using a conventional water-based paint containing a pigment, this result being achieved by using only half of, or even less than half of, the amount of colouring present in a conventional paint. This result is possible because the use of a dyestuff (instead of a pigment) in the top gloss coat renders it sufficiently transparent to enable the colour in the undercoat beneath it to contribute to the overall depth of shade (in contrast, when using a conventional pigment-containing emulsion paint only the top coating contributes significantly to the overall depth of shade); for example a depth of shade achieved when using say, as much as 2—5% W/V of pigment, can be achieved using only 0.5% W/V of dyestuff—in other words, by applying to a given surface area a two-coat system embodying the invention using, say, 1 litre of undercoating composition and 1 litre of top coating composition each containing 0.5% W/V i.e. a total volume of 2 litres of composition containing 0.5% W/V of dyestuff, then a depth of shade can be achieved which is comparable or even superior to that achieved by applying to the same surface area 2 litres of a conventional emulsion paint containing as much as 2—5% W/V of pigment.

(e) Better recoating properties are exhibited. Thus, it is easier to obtain good results by coating over previously painted surfaces, this being due to the better adhesion achieved by the high proportion of polymeric binder material employed, especially in the gloss.
(f) They have better film build-up properties than conventional water-based paints.
(g) Because of the absence of pigment in the top coat, they have better flow properties, and no chalking will occur on weathering.
(h) It is possible to obtain deeper and stronger colours, for example a good black colour can be produced.
(i) They show better light fastness, i.e. lack of fade over a period of time.
(j) They have a lower film-forming temperature and coalesce at 5°C; conventional paints will not coalesce at such low temperatures unless special solvents are included in the compositions.
(k) A colour subtraction effect can be obtained as previously described, this again being due to the transparency of the top coating. Thus many more colour permutations are available.
(l) A multi-coloured, for example, mottled, effect can additionally be obtained by providing different portions of a surface each with a respective different undercoat containing a different colour and thereafter coating the entire surface with a single top gloss coat.
(m) It is found that even when no pigment is present in either coating of a two-coating system embodying the invention, i.e. only dyestuffs are present, this still retains an opacity comparable with coatings of known pigment-containing paints.
(n) Compositions embodying the invention can be applied in a much wider variety of ways than conventional water-based paints. Thus they can be applied by spraying (in contrast to known water-based paints), rolling or brushing (it being possible to apply paints using much larger brushes than for conventional water-based paints which are not readily brushed and levelled out when using large brushes).

(o) They can be formulated so as to provide good weatherproofing properties.

(p) They have a much wider range of application uses.

Thus, as illustrated in more detail below two-coat systems embodying the invention can be applied to any surface, for example, wood, aluminium, paper, leather, textile fabrics (e.g. as curtain coatings).

In particular, for decorative purposes they may be applied to wood, plaster, brick, concrete and pebbledash. When coating such surfaces, they exhibit good flow properties and high gloss, high weather and high light fastness and are of a pleasing general appearance, it being possible to produce both level colours and the special effects previously mentioned.

They are also capable of industrial application and in particular they may be sprayed onto steel work or flooring. The receiving surfaces may be primed or unprimed. They exhibit good adhesion, corrosion and chemical resistance properties.

Further substrates to which coating compositions embodying the invention can be applied are as follows:—

Bright aluminium

It is particularly preferred to coat such a substrate with a single coating of a composition capable of producing a gloss. Such a gloss coating may be applied to an un-treated substrate or to a flash or anodised surface. The composition is particularly suitable for painting of, for example, hollow ware or ladders.

Paper

As a first alternative, this may be coated by "on machine coating" using a two-coat system, the first coat being applied in a size tank followed by a knife coated top coat. The particular advantage of such a coating is the possible production of particularly dark shades. The weight of coating needs to be varied in accordance with the physical properties of the paper stock. As another alternative a top coat only can be applied to artistic papers and boards to provide a good gloss finish which can readily receive a printing ink or, alternatively, which can itself provide particularly dark shades. Paint compositions applied to paper should be of relatively low viscosity.

Leather

The constitution of the composition should be adjusted in dependence upon the type of leather as follows

(a) chrome leather—this can be coated with a top coat only, which top coat exhibits good flow properties and produces a good finish having a gloss and scuff resistance.

(b) Inferior leather—this can be provided with a good gloss finish of deep shade with one or more gloss coatings only.

(c) Refinished leather—a composition providing a gloss may be applied as an aerosol to give a coating with good adhesion properties.

Further applications of compositions embodying the invention are to textile fabrics (e.g. as curtain coatings) and for renovation of faded architectural panels, particularly of aluminium.

Of all the surface materials previously mentioned, particularly excellent results are obtained when coating on wood or aluminium.

## Claims

1. A water-based paint composition comprising an aqueous medium, a polymeric binder component and a colouring component characterized in that the colouring component is a dyestuff soluble in the aqueous medium, and the paint composition is capable of providing a gloss coating.

2. A paint composition according to claim 1 wherein the only said colouring component is the said dyestuff.

3. A paint composition according to claim 1, wherein the polymeric binder component and water are present in a proportional amount by weight of at least 3:1.

4. A paint composition according to any one of the preceding claims, capable of providing a specular gloss, when measured on a gloss meter, of at least 70% when measured for an angle of incidence of 45°.

5. A paint composition according to claim 1, which additionally contains, as a second colouring component, a pigment.

6. A paint composition according to any one of the preceding claims wherein the dyestuff is soluble in the aqueous medium to an extent of at least 1 gram per litre.

7. A paint composition according to claim 6, wherein the dyestuff is soluble to an extent of at least 10 grams per litre.

8. A paint composition according to any one of the preceding claims, wherein the dyestuff is an acid or direct dyestuff.

9. A paint composition according to claim 8, wherein the dyestuff is a pyrazolone, premetallized azo or anthraquinone dyestuff.

10. A paint composition according to any one of the preceding claims wherein the polymeric binder component is a copolymer containing, as a major constituent, units derived from vinyl acetate.

11. A paint composition according to any one of claims 1 to 9, wherein the polymeric binder component is an acrylic copolymer.

12. A combination of paint compositions for imparting colour and gloss to a surface comprising at least a first paint composition containing a first colouring component and capable of providing an undercoating and a second paint composition containing a polymeric binder component and a second colouring component and capable of providing the gloss characterized in that the first paint composition is water-based, and the second paint composition, which is capable of providing the gloss, is water-based, essentially free from pigment and contains a second colouring component (which may be the same as, or different from, the first colouring component) which is a dyestuff soluble in the water.

13. A combination according to claim 12, wherein the polymeric binder component and the water in the second paint composition are present in a proportional amount by weight of at least 3:1.

14. A combination according to claim 12 or claim 13, wherein the first colouring component in the first paint composition is a dyestuff soluble in the water.

15. A combination according to claim 12 or claim 13, wherein the first colouring component is a pigment.

16. A combination according to claim 12 or claim 13, wherein a portion of the first colouring component is a pigment, the remainder being a dyestuff soluble in the water.

17. A combination according to claim 16, wherein the major portion of the first colouring component is a pigment.

## Patentansprüche

1. Wässriges Anstrichmittel mit einem wässrigen Medium, einer polymeren Binderkomponente und einer färbenden Komponente, dadurch gekennzeichnet, daß die färbende Komponente ein in dem wässrigen Medium löslicher Farbstoff ist und das Anstrichmittel einen Glanzüberzug zu liefern vermag.

2. Anstrichmittel nach Anspruch 1, worin die einzige färbende Komponente der Farbstoff ist.

3. Anstrichmittel nach Anspruch 1, worin die polymere Binderkomponente und Wasser in einer Gewichtsanteilmenge von wenigstens 3:1 vorliegen.

4. Anstrichmittel nach einem der vorhergehenden Ansprüche, das für einen Einfallswinkel von 45° einen Spiegelglanz von wenigstens 70%, gemessen mit einem Glanzmesser, zu liefern vermag.

5. Anstrichmittel nach Anspruch 1, das zusätzlich als zweite färbende Komponente ein Pigment enthält.

6. Anstrichmittel nach einem der vorhergehenden Ansprüche, worin der Farbstoff im wässrigen Medium zu wenigstens 1 g/l löslich ist.

7. Anstrichmittel nach Anspruch 6, worin der Farbstoff zu wenigstens 10 g/l löslich ist.

8. Anstrichmittel nach einem der vorhergehenden Ansprüche, worin der Farbstoff ein Säure- oder Direktfarbstoff ist.

9. Anstrichmittel nach Anspruch 8, worin der Farbstoff ein Pyrazolon-, vormetallisierter Azo- oder Anthrachinin-Farbstoff ist.

10. Anstrichmittel nach einem der vorhergehenden Ansprüche, worin die polymere Binderkomponente ein Copolymer ist, das als Hauptbestandteil von Vinylacetat abgeleitete Einheiten enthält.

11. Anstrichmittel nach einem der Ansprüche 1 bis 9, worin die polymere Binderkomponente ein Acryl-Copolymer ist.

12. Eine Kombination von Anstrichmitteln, um einer Oberfläche Farbe und Glanz zu verleihen, mit wenigstens einem ersten Anstrichmittel, das eine erste färbende Komponente enthält und einen Untergrundüberzug zu liefern vermag, und einem zweiten Anstrichmittel, das eine polymere Binderkomponente und eine zweite färbende Komponente enthält und den Glanz zu liefern vermag, dadurch gekennzeichnet, daß das erste Anstrichmittel wässrig ist und das zweite Anstrichmittel, das den Glanz zu liefern vermag, wässrig ist, im wesentlichen frei von Pigment ist und eine zweite färbende Komponente enthält (die die gleiche wie die erste färbende Komponente oder von dieser verschieden sein kann), die ein in Wasser löslicher Farbstoff ist.

13. Kombination nach Anspruch 12, worin die polymere Binderkomponente und das Wasser in dem zweiten Anstrichmittel in einer Gewichtsanteilmenge von wenigsten 3:1 vorliegen.

14. Kombination nach Anspruch 12 oder Anspruch 13, worin die erste färbende Komponente in dem ersten Anstrichmittel ein im Wasser löslicher Farbstoff ist.

15. Kombination nach Anspruch 12 oder Anspruch 13, worin die erste färbende Komponente ein Pigment ist.

16. Kombination nach Anspruch 12 oder Anspruch 13, worin ein Anteil der ersten färbenden Komponente ein Pigment ist, während der Rest ein im Wasser löslicher Farbstoff ist.

17. Kombination nach Anspruch 16, worin der Hauptanteil der ersten färbenden Komponente ein Pigment ist.

**Revendications**

1. Composition de peinture à base d'eau comprenant un milieu aqueux, un composant liant polymérique et un composant de coloration, caractérisée en ce que le composant de coloration est une matière colorante soluble dans le milieu aqueux, et la composition de peinture est capable de produire un revêtement satiné.

2. Composition de peinture selon la revendication 1 où le seul composant de coloration est la mattière colorante.

3. Composition de peinture selon la revendication 1 où le composant liant polymérique et l'eau sont présents à une quantité proportionnelle, en poids, d'au moins 3:1.

4. Composition de peinture selon l'une quelconque des revendications précédentes, capable de produire un brillant spéculaire, en mesurant sur un appareil de mesure du brillant, d'au moins 70% en mesurant pour un angle d'incidence de 45°.

5. Composition de peinture selon la revendication 1 qui contient de plus, comme second composant de colouration, un pigment.

6. Composition de peinture selon l'une quelconque des revendications précédentes où la matière colorante est soluble dans le milieu aqueux jusqu'à au moins 1 g/litre.

7. Composition de peinture selon la revendication 6 où la matière colorante est soluble jusqu'à au moins 10 g/litre.

8. Composition de peinture selon l'une quelconque des revendications précédentes, où la matière colorante est une matière colorante acide ou directe.

9. Composition de peinture selon la revendication 8 où la matière colorante est une matière colorante d'anthraquinone ou azo prémétallisée ou de pyrazolone.

10. Composition de peinture selon l'une quelconque des revendications précédentes où le composant de liant polymérique est un copolymère contenant, comme constituant majeur, des unités dérivées de l'acétate de vinyle.

11. Composition de peinture selon l'une quelconque des revendications 1 à 9 où le composant liant polymérique est un copolymère acrylique.

12. Combinaison de compositions de peinture pour impartir de la couleur et du satiné à une surface comprenant au moins une première composition de peinture contenant un premier composant de coloration et capable de produire une couche de fond et une seconde composition de peinture contenant un composant liant polymérique et un second composant de coloration et capable de produire le satiné caractérisée en ce que la première composition de peinture est à base d'eau et la seconde composition de peinture, qui est capable de produire le satiné, est à base d'eau, essentiellement sans pigment, contient un second composant de coloration (qui peut être le même ou différent du premier composant de coloration) qui est une matière colorante soluble dans l'eau.

13. Combinaison selon la revendication 12, où le composant liant polymérique et l'eau dans la seconde composition de peinture sont présents en une quantité proportionnelle pondérale d'au moins 3:1.

14. Combinaison selon la revendication 12 ou la revendication 13 où le premier composant de coloration dans la première composition de peinture est une matière colorante soluble dans l'eau.

15. Combinaison selon la revendication 12 ou la revendication 13 où le premier composant de coloration est un pigment.

16. Combinaison selon la revendication 12 ou la revendication 13 où une partie du premier composant de coloration est un pigment, le restant étant une matière colorante soluble dans l'eau.

17. Combinaison selon la revendication 16 où la partie majeure du premier composant de coloration est un pigment.